# EUROPÄISCHE PATENTSCHRIFT

(11) **EP 2 880 735 B1**
(45) Veröffentlichungstag und Bekanntmachung des Hinweises auf die Patenterteilung: **04.05.2022**
(21) Anmeldenummer: 13744579.7
(22) Anmeldetag: 02.08.2013
(51) Int. Cl.: H02J 3/38, F03D 7/02, F03D 7/04, F03D 9/25, H02J 3/46, H02J 3/16

(54) **VERBESSERTE SPANNUNGSREGELUNG FÜR WINDENERGIEANLAGEN**
IMPROVED VOLTAGE CONTROL FOR WIND TURBINES
AMÉLIORATION DE LA RÉGULATION DE LA TENSION POUR DES ÉOLIENNES

(30) Priorität: 03.08.2012 DE 102012213830
(43) Veröffentlichungstag der Anmeldung: 10.06.2015
(73) Patentinhaber: Siemens Gamesa Renewable Energy Service GmbH, 20097 Hamburg (DE)
(72) Erfinder: FORTMANN, Jens, 13156 Berlin (DE); DINKHAUSER, Vincenz, 24787 Fockbek (DE)
(74) Vertreter: Glawe, Delfs, Moll
(86) Internationale Anmeldenummer: PCT/EP2013/066292
(87) Internationale Veröffentlichungsnummer: WO 2014/020157

(56) Entgegenhaltungen:
- EP-A2- 1 643 609
- WO-A2-2012/089675
- DE-A1-102004 060 943
- US-A1- 2010 134 076
- None

## Beschreibung

Die Erfindung betrifft eine Windenergieanlage umfassend einen Rotor, einen damit angetriebenen Generator mit einem Umrichter und einer Steuereinrichtung, welche einen Eingang für ein Steuersignal zur Blindleistungsabgabe und einen Regler für den Umrichter aufweist, der vorzugsweise einen Spannungsregler aufweist und dazu ausgebildet ist, die Blindleistungsabgabe gemäß dem Steuersignal zu regeln.

Zur Gewährleistung einer hohen Stabilität und Netzqualität in den Versorgungs- und Übertragungsnetzen für elektrische Energie verlangen Netzbetreiber in zunehmendem Maße Unterstützung durch die Energieerzeuger. Dies betrifft nicht nur konventionelle Kraftwerke, sondern in zunehmendem Maße auch Windenergieanlagen bzw. aus mehreren Windenergieanlagen bestehende Windparks. Grundsätzlich ist es so, dass Windparks genauso wie konventionelle Kraftwerke über so genannte Stufentransformatoren an das Netz angeschlossen sind. Bei Stufentransformatoren handelt es sich um Transformatoren, die mit einem Stufenschalter zur Anpassung an ein sich änderndes Spannungsniveau im Netz versehen sind. Da es beim Umschalten des Stufenschalter zu einer Spannungsänderung kommt, reagieren konventionelle Kraftwerke mit einer kurzfristigen Änderung der Blindleistungsabgabe, und zwar wegen der bei ihnen typischerweise verwendeten Synchrongeneratoren und deren spezifischen Eigenarten. Im allgemeinen ist eine solche Blindleistungsabgabe bei einer echten Spannungsänderung im Netz durchaus erwünscht, jedoch nicht wenn es nur um eine reinen Umschaltvorgang des Stufentransformators geht. Diese Problematik der unerwünschten Abgabe von Blindleistung infolge von Schaltvorgängen am Stufenschalter stellt sich bei Windenergieanlagen in erhöhtem Maße, da Windenergieanlagen bzw. aus mehreren Windenergieanlagen bestehende Windparks typischerweise über einen Stufenschalter an das Netz angeschlossen sind, der gröber gestuft ist verglichen mit einem Stufenschalter eines herkömmlichen Kraftwerks.

Für den Betrieb eines Windparks ist es bekannt, dass ein Parkmaster die gesamte Blindleistungsabgabe aller Windenergieanlagen des Parks ermittelt und mit einem Zielwert vergleicht (WO 2012/089675 A2). Bei Abweichung werden korrigierte Spannungssollwerte an die Windenergieanlagen übermittelt. Daraus werden Korrekturfaktoren gebildet, wobei eine Glättung der Ist-Spannung erfolgt, und schließlich werden die Korrekturfaktoren die zu einem Gesamtfaktor aufaddiert. Zum Ausgleich von Spannungssprüngen durch Schalten eines Stufentransformators ist nichts offenbart.

Weiter es ist bekannt, zur Verbesserung des Verhaltens der lokalen Regelung einen PI-Regler vorzusehen (US 2010/134076 A1). PI-Regler weisen einen Regelungspfad mit einem Proportional-Term und einem Integral-Term auf, die intrinsisch zusammengehören und aus denen ein gemeinsames Ausgangssignal gebildet ist. Derartige Regler weisen Vorzüge hinsichtlich stationärer Genauigkeit auf, ihr Verhalten bei schnellen sprungartigen Störungen ist jedoch eher ungünstig.

Einschlägige Netzbetreiberrichtlinien sehen vor, dass die Blindleistungsabgabe von Windenergieanlagen mit einem Totband erfolgt. Hierbei wird unter Totband ein Toleranzbereich für die Spannung um den Nennwert der Spannung verstanden. Da Windenergieanlagen wegen der typischerweise bei ihnen verwendeten Generatorbauart nicht das intrinsisch stabilisierend wirkende Blindleistungsabgabe-Verhalten von konventionellen Kraftwerken aufweisen, kann die Anwendung des Totbands zu einer unerwünschten Verringerung der Spannungsstabilität führen.

Der Erfindung liegt die Aufgabe zu Grunde, eine verbesserte Regelung zu schaffen, welche die genannten Nachteile vermeidet.

Die erfindungsgemäße Lösung liegt in einer Windenergieanlage und einem Verfahren gemäß den unabhängigen Ansprüchen. Vorteilhafte Weiterbildungen sind Gegenstand der abhängigen Ansprüche.

Bei einer Windenergieanlage umfassend einen Rotor, einen damit angetriebenen Generator mit einem Umrichter und einer Steuereinrichtung, welche einen Eingang für ein Steuersignal zur Blindleistungsabgabe und einen Regler für den Umrichter aufweist, der vorzugsweise ein Spannungsregler ist und der dazu ausgebildet ist, aus dem Steuersignal für die Blindleistungsabgabe lokal einen Blindleistungs-Sollwert für die Windenergieanlage zu berechnen, die tatsächlich abgegebene Spannung der Windenergieanlage zu erfassen und nach Vergleich mit dem Steuersignal die von der Windenergieanlage abgegebene Blindleistung zu korrigieren, ist erfindungsgemäß der Regler mit einem Zusatzmodul versehen, welches für den Regler vorgesehen ist, durch welches ein gesonderter Großsignalpfad und ein gesonderter Kleinsignalpfad verlaufen, welches ausgangsseitig mit dem Regler verbunden und dazu ausgebildet ist, auf eine Eingangsgröße des Reglers zu wirken und welches ausgebildet ist, derart mit dem Regler zusammenzuwirken, dass im Kleinsignalpfad ein gegenüber dem Großsignalpfad zusätzliches Speicherglied Zustandswerte des Kleinsignalpfads aus der Vergangenheit speichert und dass der Regler ausgebildet ist, ein Ausgangssignal des Zusatzmoduls zur Berechnung des Blindleistungs-Sollwertes für die Windenergieanlage zu nutzen.

Bei dem Speicherglied kann es sich insbesondere um ein Verzögerungselement, einen Filter, vorzugsweise einen Filter mit unbegrenzter Impulsantwort (IIR-Filter), eine Rampe oder um einen vorzugsweise autoregressiven (AR) gleitenden Mittelwertbildner (MA bzw. ARMA) handeln.

Die Erfindung fußt auf der Erkenntnis, dass die im Regelbetrieb vorgenommenen Umschaltungen, welche bei der bisherigen Verfahrensweise mit Stufentransformatoren zu Problemen hinsichtlich der Blindleistungseinspeisung führten, auf kleine Änderungen der Spannung zurückzuführen sind. In diesem Fall, also bei einer kleinen Änderung der Spannung, erfolgt gemäß der Erfindung nur eine langsame Änderung der Blindleistung. Damit können auch sehr langsame (schleichende) Spannungsänderungen berücksichtigt werden. Hingegen sind größere Änderungen der Spannung dann zu erwarten, wenn es zu abrupten Vorgängen im Netz kommt, insbesondere im Zusammenhang mit einem Netzkurzschluss; hierbei ist eine schnelle Reaktion erforderlich. Der Großsignalpfad ist in der Regel frei von Speichergliedern und kann deshalb stets schnell auf Änderungen reagieren.

Der Kern der Erfindung liegt somit in dem Gedanken, dass bei großen Änderungen schnell und bei kleinen Änderungen der Spannung eher langsam und unter Berücksichtigung von Zustandswerten der Vergangenheit reagiert werden soll. Die Erfindung führt damit eine Transformation aus der Amplitudenebene (für die Größe der Spannungsabweichung) in die Zeitebene (für die Geschwindigkeit der Spannungsänderung und der Reaktion darauf) durch. Die Kleinsignale werden gemäß der Erfindung also nicht absolut (d. h. losgelöst von den vorherigen Werten) betrachtet werden, sondern vor dem Hintergrund der jeweiligen Vergangenheitswerte. Daher sieht die Erfindung in dem Kleinsignalpfad die Anordnung eines Speicherglieds vor, das Vergangenheitswerte berücksichtigt. Praktisch kann es sich hierbei insbesondere um ein Verzögerungsglied handeln, wie es aus Regelungstechnik an sich bekannt ist, um einen Filter, insbesondere um einen Tiefpass, oder um eine Rampenfunktionsglied oder um einen Mittelwertbildner bildet.

Somit wird dank der Erfindung auf kleine Spannungsänderungen mit einer eher langsamen Blindleistungsänderung reagiert. Das unerwünschte Verhalten gemäß dem Stand der Technik, wonach auch kleine Spannungssprünge, wie sie beispielsweise bei der Betätigung eines Stufenschalters auftreten, kräftige Änderungen der Blindleistungsabgabe hervorrufen, wird damit wirkungsvoll vermieden. Gleichwohl bleibt die schnelle Reaktionsfähigkeit zur Stützung des Netzes im Kurzschlussfall, wobei es ja innerhalb sehr kurzer Zeit zu einer großen Spannungsänderung kommt, voll erhalten. Damit vereint die Erfindung zwei ursprünglich gegensätzlich erscheinende Ziele.

Vorzugsweise weist der Großsignalpfad ein Totbandglied auf. Das Totbandglied ermöglicht auf besonders effiziente Weise eine wirksame Unterscheidung zwischen kleiner Änderung (bei welcher das Totbandglied keine Reaktion an seinem Ausgang vorsieht) und einer großen Änderung, bei welcher der Großsignalpfad dann durchschaltet.

Weiter vorzugsweise ist in dem Großsignalpfad ein Nachführungsmodul vorgesehen, das mit dem Totbandglied zusammenwirkt. Es ist dazu ausgebildet, den Mittelwert des Totbandglieds nachzuführen. Damit wird erreicht, dass das Totbandglied selbst mittelwertfrei ist, und zwar auch dann, wenn die Spannung sich langfristig ändert (also auch bei sog. schleichenden Spannungsänderungen). Ferner wird damit ein verändertes Spannungsniveau berücksichtigt, wie es sich beispielsweise aus dem Schalten eines Stufentransformators oder Stufenschalters ergibt. Mit dem Nachführungsmodul ist sichergestellt, dass auch bei solchermaßen verändertem Spannungsniveau das Totbandglied sich sozusagen in der Mitte seines Bereichs befindet, und damit den gewünschten Spielraum sowohl nach oben zu höherer Spannung wie auch nach unten zu niedrigerer Spannung lässt. Eine bevorzugte Ausführungsform des Nachführungsmoduls ist dem Totbandglied vorgeschaltet. Es weist zweckmäßigerweise eine hohe Zeitkonstante auf, so dass nur langfristige Änderungen erfasst werden. Bevorzugt hierfür ist eine Zeitkonstante, die mindestens eine Größenordnung (10-fache), weiter vorzugsweise mindestens das 50-fache, größer ist als eine Zeitkonstante, die der Kleinsignalpfad funktionell aufweist.

Zweckmäßigerweise ist das Zusatzmodul dem Regler vorgeschaltet. Dabei stehen zwei bevorzugte Anschlussalternativen zur Wahl, wobei andere nicht ausgeschlossen sein sollen. Die erste Alternative besteht in Anschluss an einen Eingang für einen Istwert des Reglers. Dabei kann es sich insbesondere um den Eingang handeln, an dem ein Signal für eine Abweichung der Ist-Spannung an der Windenergieanlage von einem Wert für die Soll-Spannung angelegt ist. Damit kann eine schnelle Reaktion erreicht werden, da das Zusatzmodul so unmittelbar am Eingang des Reglers tätig wird. Die zweite Alternative besteht darin, das Zusatzmodul an einen Ausgang des Reglers anzuschließen. Bei dieser Variante wirkt das Zusatzmodul auf eine Ausgangsgröße des Reglers, beispielsweise eine Stellgröße. Hiermit kann häufig ein ruhigeres, weniger zu Sprüngen oder Schwingungen neigendes Verhalten des Zusatzmoduls am Regler erreicht werden.

Zweckmäßigerweise ist im Kleinsignalpfad ein Ratenbegrenzungsglied vorgesehen. Damit wird bewirkt, dass die mögliche Anstiegsrate des ebenfalls im Kleinsignalpfads angeordneten Speicherglieds begrenzt wird. Hiermit kann auch bei ungünstigen Vergangenheitswerten ein "Weglaufen" des Speicherglieds vermieden werden, ähnlich der Funktion eines "anti wind-up" bei einem Integrator. Damit wird die Stabilität der Regelung auch bei großen Signaländerungen verbessert. Besonders bewährt ist eine Ausführungsform, bei welcher das Ratenbegrenzungsglied mit dem Speicherglied, insbesondere in seiner Ausführung als Verzögerungsglied, kombiniert ausgeführt ist. Dies ermöglicht eine sehr effiziente Implementation. Zur Vermeidung von Sprüngen in der Blindleistungsabgabe, insbesondere beim bzw. nach dem Verlassen des Totbands, kann ein Spannungsfilter zur Initialisierung an dem Speicherglied und/oder dem Ratenbegrenzungsglied vorgesehen sein. Damit erfolgt ein Nullsetzen bei Rückkehr ins Totband.

Vorzugsweise ist eine Umschaltlogik vorgesehen, die zwischen dem Kleinsignalpfad und dem Großsignalpfad umschaltet. Dies ermöglicht eine saubere Trennung der beiden Signalpfade, so dass es nicht zur unerwünschten Konkurrenz zwischen den beiden Signalpfaden kommt.

Mit Vorteil ist ein Suppressionsmodul vorgesehen, das dazu ausgebildet ist, Ausgangssignale des Großsignalpfads zu unterdrücken. Vorzugsweise ist der Kleinsignalpfad nicht betroffen, das heißt seine Signale werden weitergeleitet, so dass insoweit eine Blindleistungsregelung weiterhin besteht. Mit dem Unterdrücken des Großsignalpfads durch das Suppressionsmodul kann ein Sprung in der Blindleistung vermieden werden , wie er sonst auftreten könnte, wenn die Ist-Spannung aus dem Totband herauswandert. Damit wird erreicht, dass es bei Werten außerhalb des Totbands zu keiner Blindleistungseinspeisung kommt. Dies ist insbesondere für Windenergieanlagen in Verteilernetzen (Spannung bis 110 kV) von Vorteil. Hierbei ist es häufig erwünscht, zur Vermeidung einer Inselbildung den Strom außerhalb der Totbands nullzusetzen, bis schließlich der Fehler geklärt ist und die Spannung wieder ansteigt.

Die Erfindung bezieht sich weiter auf einen Windpark sowie Verfahren mit den Merkmalen gemäß dem zweiten und dritten unabhängigen Anspruch. Zur näheren Erläuterung wird auf das Vorstehende verwiesen. Ein Parkmaster des Windparks ist vorzugsweise so ausgebildet, einer außerhalb eines Totbands betriebenen Windenergieanlage einen solchen Sollwert für die Blindleistung und/oder Spannung zu übermitteln, der so bemessen ist, dass bei der Rückkehr in das Totband keine stationäre Abweichung besteht.

Die Erfindung wird anhand eines Ausführungsbeispiels näher erläutert, welches in den Zeichnungen dargestellt ist. Es zeigen:
- Fig.1: eine schematische Darstellung eines Windparks mit Parkmaster und einer Windenergieanlage gemäß einem Ausführungsbeispiel;
- Fig. 2: eine schematische Darstellung eines Reglers mit Zusatzmodul der Windenergieanlage gemäß dem in Figur eins dargestellten Ausführungsbeispiel;
- Fig. 3A, B: schematische Darstellungen für zwei alternative Ausführungsformen des Zusatzmoduls;
- Fig. 4: eine schematische Ansicht einer optionalen Ergänzung für das Zusatzmodul;
- Fig. 5: eine schematische Darstellung einer weiteren optionalen Ergänzung für das Zusatzmodul;
- Fig. 6: eine schematische Darstellung für eine optionale Überwachung des Arbeitsbereichs; und
- Fig. 7A, B: Verlaufskurven für Spannung und Blindleistung mit und ohne Zusatzmodul.

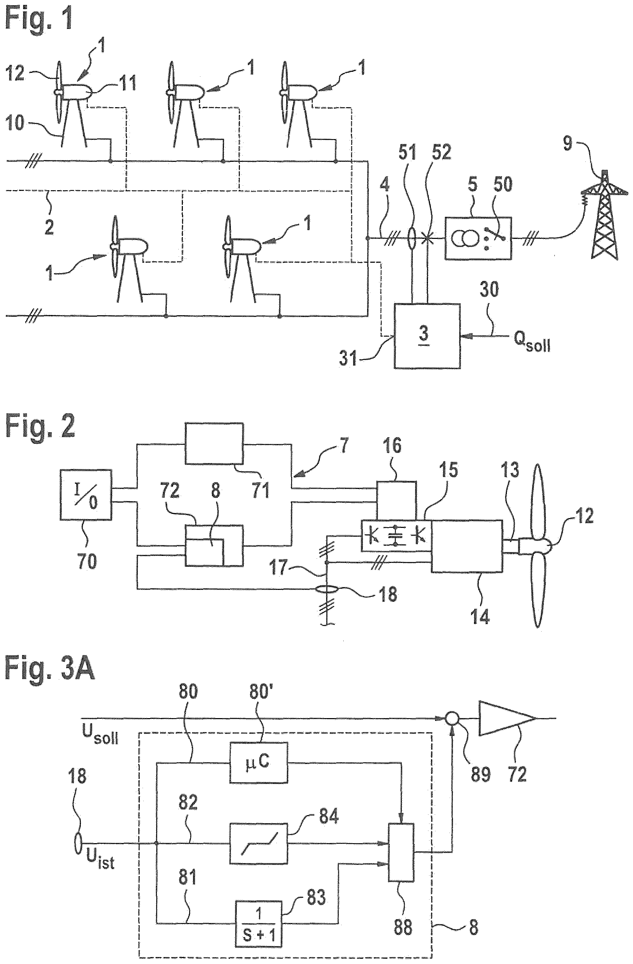

In Figur 1 dargestellt ist ein Ausführungsbeispiel für einen Windpark, welcher eine Mehrzahl von Windenergieanlagen 1 gemäß der Erfindung sowie einen Parkmaster 3 umfasst. Die Windenergieanlagen 1 sind über Signalleitungen 2 mit dem Parkmaster 3 verbunden. Weiter sind die Windenergieanlagen 1 angeschlossen an ein parkinternes Verteilungsnetz 4, dass über einen Stufentransformator 5 an ein in der Regel als Hochspannungsnetz ausgebildetes Energieübertragungsnetz 9 angeschlossen ist. An dem Stufentransformator 5 sind Sensoren 51,52 für abgegebenen Strom und Spannung (Ist-Strom und Ist-Spannung) angeordnet. Der Stufentransformator 5 weist einen automatischen Stufenschalter 51 auf, der das Übersetzungsverhältnis des Stufentransformators 5 so ändert, dass auch bei Schwankungen der Spannung im Übertragungsnetz 9 die Spannung im Verteilungsnetz 4 möglichst konstant bleibt.

Der Parkmaster 3 ist zur übergeordneten Steuerung der einzelnen Windenergieanlagen 1 ausgebildet. Er weist einen Eingang 30 auf, an dem Sollvorgaben als Signale angelegt sind, insbesondere ein Signal für eine Soll-Blindleistung Qsoll, welches beispielsweise von einer übergeordneten Leitinstanz, insbesondere des Betreibers des Übertragungsnetz 9, angelegt ist (alternativ können auch andere Signale verwendet werden, beispielsweise solche für den Phasenwinkel φ, den Leistungsfaktor cos φ, das Verhältnis von Wirkzu Blindleistung tan φ oder eine direkte Spannungsvorgabe). Daraus bestimmt der Parkmaster 3 einen Wert für eine Sollspannung Usoll, die jeweils von den einzelnen Windenergieanlagen 1 abgegeben werden soll, und übermittelt diesen Spannungssollwert Usoll an die jeweilige Windenergieanlage 1 über die Signalleitungen 2, die an einem Ausgang 31 des Park Master 3 angeschlossen ist. Dieses Signal für die Sollspannung Usoll wird von den einzelnen Windenergieanlagen 1 weiterverarbeitet.

Die einzelnen Windenergieanlagen 1 sind im Wesentlichen aufgebaut aus einem Turm 10 und einer auf dessen oberem Ende in Azimuthrichtung schwenkbar angeordneten Gondel 11, an deren Stirnseite ein Windrotor 12 drehbar angeordnet ist. Er treibt über eine Rotorwelle 13 einen Generator 14 an, der mit einem Umrichter 15 zusammenwirkt zur Erzeugung elektrischer Energie, die über eine mit dem Verteilungsnetz 4 verbundene Anschlussleitung 17 abgegeben wird. Die Spannung an der jeweiligen Windenergieanlage 1 wird mittels eines an der jeweiligen Anschlussleitung 17 angeordneten Spannungssensors 18 erfasst. Zur Steuerung des Umrichters 15 ist eine Umrichtersteuerung 16 vorgesehen, an die ein Regler 72 der Windenergieanlage 1 angeschlossen ist.

Der Regler 72 ist Bestandteil einer Steuereinrichtung 7 der jeweiligen Windenergieanlage 1. Die Steuereinrichtung 7 umfasst weiter eine Ein-/Ausgabeeinheit 70, die an das Netz aus Signalleitungen 2 angeschlossen ist und über welche die Steuereinrichtung 7 Steuersignale empfängt, die von dem Parkmaster 3 an seinem Ausgang 31 ausgegeben werden , darunter das Steuersignal für den Sollspannungswert Usoll. Weiter umfasst die Steuereinrichtung 7 eine Betriebsteuerung 71. Diese und der Regler 72 wirken mit ihrem Ausgangssignal auf die Umrichtersteuerung 16 ein. Der Regler 72 ist ausgebildet zur Blindleistungssteuerung, d. h. er gibt in Abhängigkeit von dem an seinen Eingängen angelegten Signalen für die Soll-Spannung Usoll und die von dem Sensor 18 gemessene Ist-Spannung Uist ein Ausgangssignal für eine vom Umrichter 15 einzustellende Blindleistung an die Umrichtersteuerung 16 aus. Im einfachsten Fall handelt es sich hierbei um eine Statik; alternative Ausführungen sind an sich bekannt und brauchen daher nicht näher beschrieben zu werden.

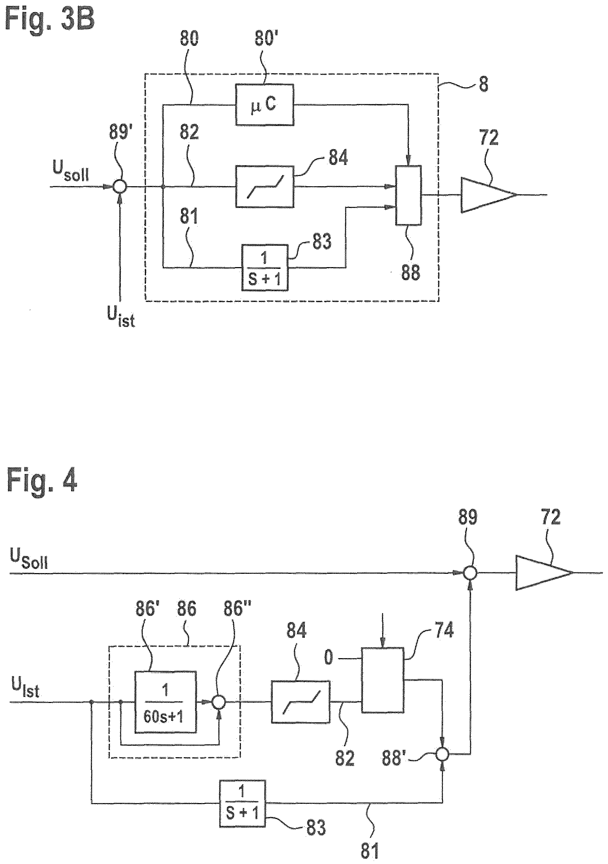

Weiterhin ist der Regler 72 erfindungsgemäßen mit einem Zusatzmodul 8 versehen. Das Zusatzmodul weist einen Eingang für die Ist-Spannung Uist und einen Ausgang für einen Korrekturwert M auf, die verknüpft sind über einen Kleinsignalpfad 81 und einen Großsignalpfad 82, die parallel zueinander liegen. Weiter ist ein Steuerpfad 80 mit einem Steuerungsglied 80' vorgesehen, welches auf einen Umschalter 88 einwirkt. Je nach Ausführungsvarianten vor- oder nachgelagert ist ein Differenzglied 89. 89' angeordnet (siehe Figur 3A, 3B). Im Kleinsignalpfad 81 ist ein Verzögerungsglied 83 angeordnet, das in dem dargestellten Ausführungsbeispiel als ein Tiefpass ausgeführt ist. Es sei angemerkt, dass es sich genauso gut auch um eine Rampenglied oder anderes Speicherglied mit einem Gedächtnis für Vergangenheitswerte handeln kann, beispielsweise einem gleitenden Mittelwertbildner. In dem Großsignalpfad 82 ist ein Totbandglied 84 angeordnet. Es ist dazu ausgebildet, bei einem Eingangsignal innerhalb eines zentralen Totbands kein Ausgangssignal auszugeben, hingegen bei einem Eingangssignal außerhalb dieses Totbands ein mit einem Faktor k proportional ansteigendes Ausgangssignal auszugeben. Die Ausgangssignale des Verzögerungsglieds 83 und des Totbandglieds 84 sind an das Umschaltglied 88 angelegt. Dieses ist angesteuert von dem Steuerungsglied 80'. Je nach dem Zustand des Steuerungsglieds 80' wird eines der beiden Ausgangssignale, dasjenige des Kleinsignalpfads 81 mit seinem Verzögerungsglied 83 oder dasjenige des Großsignalpfads 82 mit seinem Totbandglied 84, von dem Umschaltglied 88 ausgegeben. Jedoch ist das Umschaltglied 88 nicht zwingend. Es kann auch eine Signalfusion von Kleinsignalpfad 81 und Großsignalpfad 82 vorgenommen werden. Ein Beispiel für eine einfache Ausführungsform ist ein Summierglied 88' (s. Fig. 4 bis 7).

Das Zusatzmodul 8 kann auf zweierlei Weise mit dem Regler 72 verbunden sein. Zum einen kann es eingangsseitig in eine Anschlussleitung für eine Ist-Größe, nämlich der von dem Sensor 18 gemessenen Ist-Spannung Uist liegen (siehe Figur 3A). Das Ausgangssignal des Zusatzmoduls 8 wird dann über das Differenzglied 89, an dessen anderen Eingang die Sollspannung Usoll angelegt ist, auf den Eingang des Reglers 72 gelegt. Alternativ kann das Zusatzmodul 8 auch hinter dem Differenzglied 89 angeordnet sein (siehe Figur 3B).

Optional kann in dem Großsignalpfad 82 ein Nachführungsmodul 86 vorgesehen sein, welches dem Totbandglied 84 vorgeschaltet ist. Das Nachführungsmodul 86 ist vorzugsweise als ein sog. Washout-Filter ausgeführt. Damit werden schnelle Spannungsänderungen, wie sie insbesondere im Fall eines Kurzschlusses auftreten, direkt weitergeleitet. Gleichzeitig erfolgt eine Mittelwertbefreiung, so dass das Totbandglied 84 mittelwertfrei gehalten wird. Es weist damit vollen Hub sowohl nach oben zu höherer Spannung wie auch nach unten zu niedrigerer Spannung auf. Mit dem Nachführungsmodul 86 kann daher im Großsignalpfad 82 besser und gezielter auf solche Änderungen schnell reagiert werden, und zwar auch dann, wenn es zu Änderungen des Spannungsniveaus gekommen ist, beispielsweise aufgrund eines Schaltvorgangs am Stufenschalter 50. Das Nachführungsmodul 86 ist in dem dargestellten Ausführungsbeispiel als zweiteiliger Washout-Filter aufgebaut, nämlich mit einem als Tiefpass ausgeführten eigentlichen Filterkern 86' und einem über ein nachfolgendes Differenzglied 86" verknüpften Parallelzweig.

Weiter kann in dem Großsignalpfad 82 ein schaltbares Suppressionsglied 74 vorgesehen sein. Es ist zwischen zwei Stellungen umschaltbar, einer Normalbetriebstellung und einer Sperrstellung. In der Normalbetriebstellung wird das Ausgangssignal des Totbandglied 84 durchgeschaltet, d.h. das Suppressionsglied 74 ist funktionell transparent. In der Sperrstellung hingegen wird das Ausgangssignal des Totbandglieds 84 ignoriert. Das bedeutet, dass auf große Änderungen, also solchen die den Großsignalpfad 82 durchlaufen, nicht mehr mit einer Änderung der Blindleistungsabgabe reagiert wird. Kleine Änderungen, also solchen die den Kleinsignalpfad 81 durchlaufen haben, werden von dem Suppressionsglied 74 nicht berührt, das heißt auf diese Änderungen wird weiterhin durch eine Änderung der Blindleistungsabgabe reagiert. Es erfolgt insoweit also weiterhin eine Blindleistungsregelung.

Gemäß einer weiteren Option ist in dem Kleinsignalpfad 81 ein Ratenbegrenzungsglied 85 vorgesehen. Das Ratenbegrenzungsglied 85 hält den Ausgang des als Verzögerungsglied 83 ausgeführten Speicherglieds konstant, solange sich dessen Wert außerhalb eines einstellbaren Bereichs (vorzugsweise entsprechend der Breite des Totbands) befindet. Damit werden übergroße Ausschläge verhindert, so dass die Regelung insgesamt nach Fehlerklärung schneller wieder auf die ursprünglichen Werte vor Eintritt des Netzfehlers zurückkehren kann. Weiter ist optional ein Halteglied 87 in dem Kleinsignalpfad 81 angeordnet. Es wird über eine Ansteuerungsschaltung 75 immer dann angesteuert, wenn sich die von dem Spannungssensor 18 gemessene Istspannung Uist außerhalb des Totbands befindet. In diesem Fall wird der Ausgangswert des Kleinsignalpfad 81 auf den zuletzt erreichten Wert "eingefroren", indem das Halteglied 87 den zuletzt erreichten Wert ausgibt, solange die Istspannung sich außerhalb des Totbands befindet. Geht die Istspannung wird wieder in das Totband zurück, so wird das Halteglied 87 freigegeben und es gibt an seinem Ausgang wieder den Wert aus, der an seinem Eingang anliegt. Damit wird ein besseres Regelverhalten insbesondere nach Fehlerklärung erreicht.

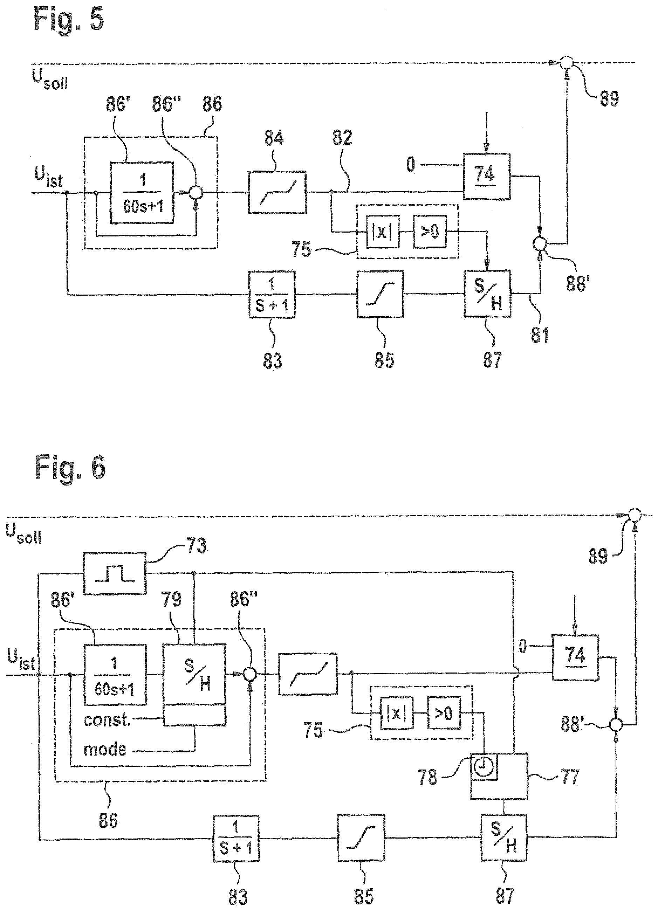

In Fig. 6 ist eine weitere optionale Ergänzung dargestellt. Sie umfasst einen Arbeitsbereichs-Detektor 73 für den Umrichter 15. Er ist dazu ausgebildet, anhand der Ist-Spannung und voreingestellter Grenzwerte Umin, Umax festzustellen, ob die gegenwärtige Spannung noch im Arbeitsbereich des Umrichters 15 liegt. Ist das nicht der Fall, so wird ein entsprechendes Fehlersignal von dem Detektor 73 ausgegeben. Dieses Fehlersignal wird verwendet zur Stillsetzung des Nachführungsmoduls 86 und/oder des Speicherglieds 85 (mit oder ohne Ratenbegrenzungsglied 87).

Der Arbeitsbereichs-Detektor 73 wirkt mit dem Nachführungsmodul 86 auf folgende Weise zusammen: an dem Nachführungsmodul 86 ist ein schaltbares Halteglied 79 angeordnet. Es ist ähnlich wie das Halteglied 87 aufgebaut, weist jedoch zusätzlich einen Eingang für ein Festwertsignal "const." auf. Ferner weist es außer seinem Steueranschluss, an welchem das Ausgangssignal des Arbeitsbereichs-Detektor 73 angeschlossen ist, einen weiteren Steueranschluss "mode" auf, der als Modusselektor fungiert. Gibt der Arbeitsbereichs-Detektor 73 sein Fehlersignal aus, so liegt es an dem Steueranschluss des Halteglieds 79 an, und das Halteglied 79 speichert in seiner Normalbetriebsart den zuletzt angelegten Wert und gibt diesen weiterhin aus. Ist zusätzlich der weiteres Steueranschluss "const." aktiviert, so gibt das Halteglied 79 nicht den zuletzt gespeicherten Wert, sondern das Festwertsignal "const." aus. Das bedeutet, dass beim Verlassen des Arbeitsbereichs des Umrichters 15 das Ausgangssignal des Filterkerns 86' festgesetzt wird, und zwar je nach Betriebsart entweder auf den zuletzt anliegenden Wert oder auf den Festwert.

Ferner wirkt der Arbeitsbereichs-Detektor 73 auf das Speicherglied 83 bzw. das mit ihm verbundenen Ratenbegrenzungsglied 85 ein. Dazu ist ein Kombinations-Schaltglied 77 vorgesehen. Es weist zwei Eingänge sowie einen Ausgang auf, wobei der Ausgang dann aktiv ist, wenn mindestens eines der beiden Eingangssignale wirksam ist. An einem ersten Eingang ist das Fehlersignal von dem Arbeitsbereichs-Detektor 73 angelegt. Dieser Eingang ist direkt wirksam. An einem zweiten Eingang ist die an Steuerschaltung 75 angelegt, welche immer dann ein Signal ausgibt, wenn sich die Ist-Spannung Uist außerhalb des Totbands befindet. Der zweite Eingang ist indirekt wirksam, nämlich über ein Zeitglied 78, welches nach einer voreinstellbaren Zeitdauer von beispielsweise 3 s unterbricht. Mit dieser Ausführung des Kombinations-Schaltglied 77 wird erreicht, dass (i) im Fall eines Verlassens des Arbeitsbereichs des Umrichters 15 (erkannt von dem Arbeitsbereichs-Detektor 73) oder (ii) im Fall eines Verlassens des eingestellten Totbands ein Signal ausgegeben und an das Halteglied 87 angelegt wird, welches daraufhin den zuletzt anliegenden Wert speichert wie bereits vorstehend beschrieben. Der zuletzt anliegende Wert wird damit sozusagen "eingefroren". Im zweitgenannten Fall, also bei dem Verlassen des Totbands, unterbricht jedoch das Zeitglied 78 nach 3 s, so dass kein Signal mehr an das Halteglied 87 ausgegeben wird. Es speichert dann nicht mehr, sondern leitet die an seinem Eingang anliegenden Werte direkt an seinen Ausgang weiter. Mit dem letztgenannten Fall wird der Erkenntnis Rücksicht getragen, dass bei einem Verlassen des Totbands für mehr als 3 s nicht mehr vom Vorliegen eines üblichen Netzfehlers auszugehen ist und deshalb das für den Netzfehler-Fall vorgesehene "Einfrieren" beendet werden soll. Die Regelung der Windenergieanlage kann sich dann wieder auf alle aktuellen Signale stützen.

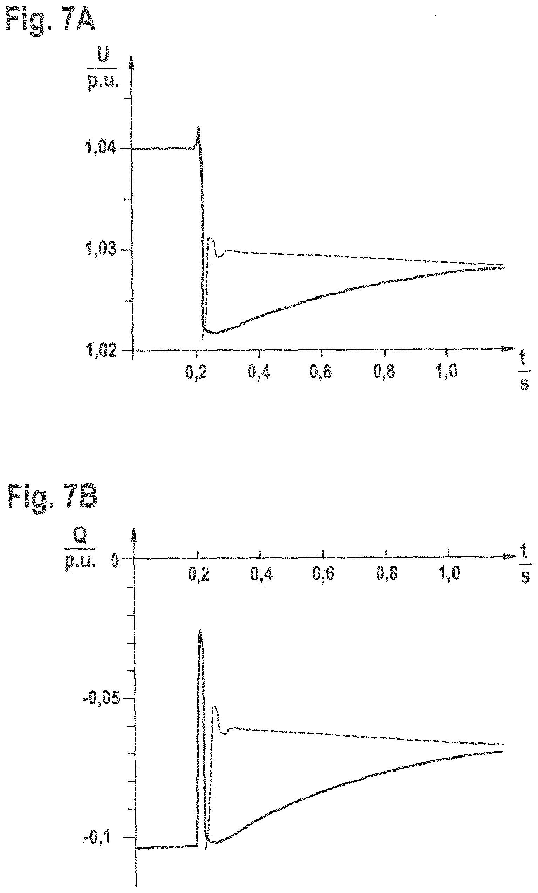

Das mit dem um das Zusatzmodul 8 verstärkten Regler 7 erreichte Betriebsverhalten bei Änderung der Ist-Spannung ist in Figur 7A, B dargestellt. In Figur 7A ist der Verlauf der Ist-Spannung dargestellt, und in Figur 7B ist der Verlauf der Blindleistungsabgabe dargestellt. Zum Zeitpunkt T = 1 s kommt es zu einer Änderung der Netzspannung um etwa 1,5 % und dementsprechend zu einem Umschaltvorgang des Stufenschalters 51. Die gestrichelte Linie zeigt das Verhalten einer konventionellen Regelung der Windenergieanlage. Man erkennt deutlich, dass die Spannungsänderung sowohl zu einer kurzen impulsartigen Änderung der Blindleistungseinspeisung führt, wobei sich unmittelbar im Anschluss ein anderes Blindleistungsniveau einstellt (siehe den schwach abfallenden Teil der gestrichelte Linie für die Blindleistung im Zeitraum von t = 1,05 s bis t = 1,9 s. Mit dem erfindungsgemäßen Zusatzmodul 8 ändert sich das Verhalten. Zwar kommt es bei der Spannungsänderung immer noch zu einer impulsartigen Blindleistungseinspeisung (siehe Figur 6A, durchgezogene Linie), jedoch kehrt die Blindleistungseinspeisung nach einem kurzen nadelförmigen Impuls wieder etwa auf das vor der Spannungsänderung anliegende Potenzial zurück, um von dort aus dann allmählich (in Anpassung an die geänderte Ist-Spannung) anzusteigen. Eine nicht gewünschte sofortige stationäre Änderung der Blindleistungseinspeisung allein als Folge des Schaltvorgangs des Stufenschalters 51 wird somit vermieden.

## Patentansprüche

1. Windenergieanlage umfassend einen Rotor (12), einen damit angetriebenen Generator (14) mit einem Umrichter (15) und einer Steuereinrichtung (7), welche einen Eingang für ein Steuersignal zur Blindleistungsabgabe und einen Regler (72) für den Umrichter (15) aufweist, wobei der Regler (72) dazu ausgebildet ist, aus dem Steuersignal für die Blindleistungsabgabe lokal einen Blindleistungs-Sollwert für die Windenergieanlage zu berechnen, die tatsächlich abgegebene Spannung der Windenergieanlage zu erfassen und nach Vergleich mit dem Steuersignal zur Blindleistungsabgabe die von der Windenergieanlage abgegebene Blindleistung zu korrigieren,
**dadurch gekennzeichnet, dass**
der Regler (72) mit einem Zusatzmodul (8) versehen ist,
welches für den Regler (72) vorgesehen ist,
durch welches ein gesonderter Kleinsignalpfad (81) und ein gesonderter Großsignalpfad (82) verlaufen, welches ausgangsseitig mit dem Regler (72) verbunden und dazu ausgebildet ist, auf eine Eingangsgröße des Reglers (72) zu wirken und
welches ausgebildet ist, derart mit dem Regler (72) zusammenzuwirken, dass im Kleinsignalpfad (81) ein gegenüber dem Großsignalpfad (82) zusätzliches Speicherglied (83) Zustandswerte des Kleinsignalpfads (81) aus der Vergangenheit speichert und dass der Regler (72) ausgebildet ist, ein Ausgangssignal des Zusatzmoduls (8) zur Berechnung des Blindleistungs-Sollwertes für die Windenergieanlage zu nutzen.

2. Windenergieanlage nach Anspruch 1, **dadurch gekennzeichnet, dass** im Großsignalpfad (82) ein Totbandglied (84) angeordnet ist.

3. Windenergieanlage nach Anspruch 1 oder 2, **dadurch gekennzeichnet, dass** das Zusatzmodul (8) dem Regler (72) vorgeschaltet ist.

4. Windenergieanlage nach Anspruch 3, **dadurch gekennzeichnet, dass** das Zusatzmodul (8) an einem Eingang für einen Istwert des Reglers (72) angeschlossen ist.

5. Windenergieanlage nach Anspruch 3, **dadurch gekennzeichnet, dass** das Zusatzmodul (8) an einem Eingang für einen Sollwert des Reglers (72) angeschlossen ist.

6. Windenergieanlage nach einem der Ansprüche 1 bis 5, **dadurch gekennzeichnet, dass** der Kleinsignalpfad (81) ein Ratenbegrenzungsglied (85) aufweist.

7. Windenergieanlage nach Anspruch 6, **dadurch gekennzeichnet, dass** das Ratenbegrenzungsglied (85) mit dem Speicherglied (83) kombiniert ist.

8. Windenergieanlage nach einem der Ansprüche 3 bis 7, **dadurch gekennzeichnet, dass** in dem Großsignalpfad (82) ein Totbandglied (84) angeordnet und ein Nachführungsmodul (86) vorgesehen ist, wobei das Nachführungsmodul(86) mit dem Totbandglied (84) zusammenwirkt und diesem vorzugsweise vorgeschaltet ist.

9. Windenergieanlage nach Anspruch 8, **dadurch gekennzeichnet, dass** das Nachführungsmodul (86) eine Zeitkonstante aufweist, die mindestens eine Größenordnung, weiter vorzugsweise mindestens 50 mal, größer ist als eine funktionelle Zeitkonstante des Kleinsignalpfads (81).

10. Windenergieanlage nach einem der Ansprüche 1 bis 9, **dadurch gekennzeichnet, dass** ein Umschalter (88) vorgesehen ist, der zwischen dem Kleinsignalpfad (81) und dem Großsignalpfad (82) umschaltet, vorzugsweise nach Maßgabe einer Umschaltsteuerung (88').

11. Windenergieanlage nach einem der Ansprüche 1 bis 10, **dadurch gekennzeichnet, dass** ein Suppressionsglied (74) vorgesehen ist, das ein Ausgangssignal des Großsignalpfads (82) unterdrückt.

12. Windenergieanlage nach einem der Ansprüche 1 bis 11, **dadurch gekennzeichnet, dass** Halteglieder (76, 87) für den Großsignalpfad (82) und/oder den Kleinsignalpfad (81) vorgesehen sind.

13. Windenergieanlage nach Anspruch 12, **dadurch gekennzeichnet, dass** das Halteglied (76) für den Großsignalpfad (82) von einem Detektor (73) für den Arbeitsbereich des Umrichters (15) so angesteuert ist, dass es beim Verlassen des Arbeitsbereichs aktiviert ist.

14. Windenergieanlage nach Anspruch 12 oder 13, **dadurch gekennzeichnet, dass** das Halteglied (87) für den Kleinsignalpfad (81) von einer Steuereinrichtung (75) so angesteuert ist, dass es beim Verlassen des Totbands aktiviert ist und/oder beim Verlassen des Arbeitsbereichs.

15. Windenergieanlage nach Anspruch 14, **dadurch gekennzeichnet, dass** ein Zeitglied vorgesehen ist, welches die Aktivierung beim Verlassen des Totbands nach einer einstellbaren Zeitdauer beendet.

16. Windpark umfassend mehrere Windenergieanlagen (1) und einen Parkmaster (3), **dadurch gekennzeichnet, dass** die Windenergieanlagen nach einem der Ansprüche 1 bis 15 ausgebildet sind.

17. Windpark nach Anspruch 16, **dadurch gekennzeichnet, dass** der Parkmaster (3) so auf das Zusatzmodul (8) abgestimmt ist, dass er ausgebildet ist, einer außerhalb eines Totbands betriebenen Windenergieanlage einen solchen Sollwert für die Blindleistung und/oder Spannung zu übermitteln, der so bemessen ist, dass bei der Rückkehr in das Totband keine stationäre Abweichung besteht.

18. Verfahren zum Betreiben einer Windenergieanlage umfassend einen Rotor (12), einen damit angetriebenen Generator (14) mit einem Umrichter (15) und einer Steuereinrichtung (7), welche einen Eingang für ein Steuersignal zur Blindleistungsabgabe und einen Regler (72) für den Umrichter (15) aufweist, mit lokalem Berechnen eines Blindleistungs-Sollwert für die Windenergieanlage aus dem Steuersignal für die Blindleistungsabgabe,
Erfassen der tatsächlich abgegebenen Ist-Spannung der Windenergieanlage, und Vergleichen mit dem Steuersignal zur Blindleistungsabgabe und Korrigieren der von der Windenergieanlage abgegebenen Blindleistung,
**gekennzeichnet durch**
Aufteilen, in einem für den Regler (72) vorgesehenen und ausgangsseitig mit dem Regler (72) verbundenen Zusatzmodul (8), eines Signals für die Ist-Spannung an der Windenergieanlage auf einen durch das Zusatzmodul (8) verlaufenden gesonderten Kleinsignalpfad (81) und einen durch das Zusatzmodul (8) verlaufenden gesonderten Großsignalpfad (82), wobei der Kleinsignalpfad (81) gegenüber dem Großsignalpfad (82) ein zusätzliches Speicherglied (83) aufweist, welches Zustandswerte des Kleinsignalpfads (81) aus der Vergangenheit speichert,
Wirken des Zusatzmoduls (8) auf eine Eingangsgröße des Reglers (72), und
Zusammenwirken des Zusatzmoduls (8) derart mit dem Regler (72), dass der Regler (72) ein Ausgangssignal des Zusatzmoduls (8) zur Berechnung des Blindleistungs-Sollwertes für die Windenergieanlage nutzt.

19. Verfahren nach Anspruch 18, **dadurch gekennzeichnet, dass** die Windenergieanlage nach einem der Ansprüche 1 bis 15 weitergebildet ist.

## Claims

1. Wind turbine comprising a rotor (12), a generator (14) driven thereby having a converter (15) and a control device (7), which has an input for a control signal for the reactive power output and a regulator (72) for the converter (15), wherein the regulator (72) is designed to calculate, locally, a reactive power setpoint value for the wind turbine from the control signal for the reactive power output, to detect the actually output voltage of the wind turbine and to correct the reactive power output by the wind turbine after comparison with the control signal for the reactive power output, **characterized in that**
the regulator (72) is provided with an additional module (8),
which is provided for the regulator (72),
through which additional module a separate low-level signal path (81) and a separate high-level signal path (82) run, which additional module is connected on the output side to the regulator (72) and is designed to act on an input variable of the regulator (72) and
which additional module is designed to interact with the regulator (72) in such a way that an additional storage element (83) in comparison with the high-level signal path (82) stores state values of the low-level signal path (81) from the past in the low-level signal path (81) and **in that** the regulator (72) is designed to use an output signal of the additional module (8) to calculate the reactive power setpoint value for the wind turbine.

2. Wind turbine according to Claim 1, **characterized in that** a dead band element (84) is arranged in the high-level signal path (82).

3. Wind turbine according to Claim 1 or 2, **characterized in that** the additional module (8) is connected upstream of the regulator (72).

4. Wind turbine according to Claim 3, **characterized in that** the additional module (8) is connected to an input for an actual value of the regulator (72).

5. Wind turbine according to Claim 3, **characterized in that** the additional module (8) is connected to an input for a setpoint value of the regulator (72).

6. Wind turbine according to one of Claims 1 to 5, **characterized in that** the low-level signal path (81) has a rate limitation element (85).

7. Wind turbine according to Claim 6, **characterized in that** the rate limitation element (85) is combined with the storage element (83).

8. Wind turbine according to one of Claims 3 to 7, **characterized in that** a dead band element (84) is arranged in the high-level signal path (82) and a tracking module (86) is provided, wherein the tracking module (86) interacts with the dead band element (84) and is preferably connected upstream thereof.

9. Wind turbine according to Claim 8, **characterized in that** the tracking module (86) has a time constant which is at least an order of magnitude, further preferably at least 50 times, greater than a functional time constant of the low-level signal path (81).

10. Wind turbine according to one of Claims 1 to 9, **characterized in that** a changeover (88) is provided which switches over between the low-level signal path (81) and the high-level signal path (82), preferably according to a switchover controller (88').

11. Wind turbine according to one of Claims 1 to 10, **characterized in that** a suppression element (74) is provided which suppresses an output signal of the high-level signal path (82).

12. Wind turbine according to one of Claims 1 to 11, **characterized in that** holding elements (76, 87) are provided for the high-level signal path (82) and/or the low-level signal path (81).

13. Wind turbine according to Claim 12, **characterized in that** the holding element (76) for the high-level signal path (82) is actuated by a detector (73) for the working range of the converter (15) such that it is activated when there is a departure from the working range.

14. Wind turbine according to Claim 12 or 13, **characterized in that** the holding element (87) for the low-level signal path (81) is actuated by a control device (75) such that it is activated when there is a departure from the dead band and/or when there is a departure from the working range.

15. Wind turbine according to Claim 14, **characterized in that** a timing element is provided which ends the activation when there is a departure from the dead band after a settable time period.

16. Wind farm comprising a plurality of wind turbines (1) and a farm master (3), **characterized in that** the wind turbines are designed according to one of Claims 1 to 15.

17. Wind farm according to Claim 16, **characterized in that** the farm master (3) is matched to the additional module (8) such that it is designed to transmit to a wind turbine operated outside of a dead band such a setpoint value for the reactive power and/or voltage that is measured such that, on return to the dead band, there is no steady-state deviation.

18. Method for operating a wind turbine comprising a rotor (12), a generator (14) driven thereby having a converter (15) and a control device (7), which has an input for a control signal for the reactive power output and a regulator (72) for the converter (15), comprising local calculation of a reactive power setpoint value for the wind turbine from the control signal for the reactive power output,
detection of the actually output actual voltage of the wind turbine, and comparison with the control signal for the reactive power output and correction of the reactive power output by the wind turbine,
**characterized by**
division, in an additional module (8) provided for the regulator (72) and connected on the output side to the regulator (72), of a signal for the actual voltage at the wind turbine between a separate low-level signal path (81) running through the additional module (8) and a separate high-level signal path (82) running through the additional module (8), wherein the low-level signal path (81) has an additional storage element (83) in comparison with the high-level signal path (82), which additional storage element stores state values of the low-level signal path (81) from the past,
action of the additional module (8) to an input variable of the regulator (72), and
interaction of the additional module (8) with the regulator (72) in such a way that the regulator (72) uses an output signal of the additional module (8) to calculate the reactive power setpoint value for the wind turbine.

19. Method according to Claim 18, **characterized in that** the wind turbine is developed according to one of Claims 1 to 15.

## Revendications

1. Eolienne, comprenant un rotor (12), un générateur (14) entraîné par celui-ci et doté d'un convertisseur (15) et d'un dispositif de commande (7) qui présente une entrée pour un signal de commande pour la puissance réactive débitée et un régulateur (72) pour le convertisseur (15), le régulateur (72) étant réalisé pour calculer localement à partir du signal de commande pour la puissance réactive débitée une valeur théorique de puissance réactive pour l'éolienne, pour détecter la tension réellement débitée de l'éolienne, et après une comparaison avec le signal de commande pour la puissance réactive débitée, pour corriger la puissance réactive débitée par l'éolienne,
**caractérisée en ce que**
le régulateur (72) est muni d'un module supplémentaire (8)
qui est prévu pour le régulateur (72),
par lequel passent un trajet de signal faible séparé (81) et un trajet de signal fort séparé (82),
qui est relié côté sortie au régulateur (72) et est réalisé pour agir sur une grandeur d'entrée du régulateur (72), et
qui est réalisé pour coopérer avec le régulateur (72) de telle sorte que sur le trajet de signal faible (81), un élément de mémoire (83) supplémentaire par rapport au trajet de signal fort (82) mémorise des valeurs d'état historiques du trajet de signal faible (81), et que le régulateur (72) est réalisé pour utiliser un signal de sortie du module supplémentaire (8) pour calculer la valeur théorique de puissance réactive pour l'éolienne.

2. Eolienne selon la revendication 1, **caractérisée en ce qu'**un élément de bande morte (84) est disposé sur le trajet de signal fort (82).

3. Eolienne selon la revendication 1 ou 2, **caractérisée en ce que** le module supplémentaire (8) est connecté en amont du régulateur (72).

4. Eolienne selon la revendication 3, **caractérisée en ce que** le module supplémentaire (8) est connecté à une entrée pour une valeur réelle du régulateur (72).

5. Eolienne selon la revendication 3, **caractérisée en ce que** le module supplémentaire (8) est connecté à une entrée pour une valeur théorique du régulateur (72).

6. Eolienne selon l'une quelconque des revendications 1 à 5, **caractérisée en ce que** le trajet de signal faible (81) présente un élément de limitation de débit (85).

7. Eolienne selon la revendication 6, **caractérisée en ce que** l'élément de limitation de débit (85) est combiné avec l'élément de mémoire (83).

8. Eolienne selon l'une quelconque des revendications 3 à 7, **caractérisée en ce que** sur le trajet de signal fort (82), un élément de bande morte (84) est disposé et un module de suivi (86) est prévu, le module de suivi (86) coopérant avec l'élément de bande morte (84) et étant de préférence connecté en amont de celui-ci.

9. Eolienne selon la revendication 8, **caractérisée en ce que** le module de suivi (86) présente une constante de temps qui est supérieure à une constante de temps fonctionnelle du trajet de signal faible (81) d'au moins un ordre de grandeur, de plus grande préférence au moins 50 fois supérieure.

10. Eolienne selon l'une quelconque des revendications 1 à 9, **caractérisée en ce qu'**un commutateur (88) est prévu qui commute entre le trajet de signal faible (81) et le trajet de signal fort (82) de préférence selon la spécification d'une commande de commutation (88').

11. Eolienne selon l'une quelconque des revendications 1 à 10, **caractérisée en ce qu'**un élément de suppression (74) est prévu qui supprime un signal de sortie du trajet de signal fort (82).

12. Eolienne selon l'une quelconque des revendications 1 à 11, **caractérisée en ce que** des éléments de maintien (76, 87) pour le trajet de signal fort (82) et/ou le trajet de signal faible (81) sont prévus.

13. Eolienne selon la revendication 12, **caractérisée en ce que** l'élément de maintien (76) pour le trajet de signal fort (82) est piloté par un détecteur (73) pour une plage de travail du convertisseur (15) de telle sorte qu'il est activé lorsqu'il quitte la plage de travail.

14. Eolienne selon la revendication 12 ou 13, **caractérisée en ce que** l'élément de maintien (87) pour le trajet de signal faible (81) est piloté par un dispositif de commande (75) de telle sorte qu'il est activé lorsqu'il quitte la bande morte et/ou lorsqu'il quitte la plage de travail.

15. Eolienne selon la revendication 14, **caractérisée en ce qu'**un élément de temps est prévu qui termine l'activation lorsqu'il quitte la bande morte après une durée réglable.

16. Parc éolien, comprenant plusieurs éoliennes (1) et un maître de parc (3), **caractérisé en ce que** les éoliennes sont réalisées selon l'une quelconque des revendications 1 à 15.

17. Parc éolien selon la revendication 16, **caractérisé en ce que** le maître de parc (3) est adapté au module supplémentaire (8) de telle sorte qu'il est réalisé pour transmettre à une éolienne exploitée en dehors d'une bande morte une telle valeur théorique pour la puissance réactive et/ou la tension qui est dimensionnée de telle sorte qu'au retour dans la bande morte, aucun écart stationnaire n'existe.

18. Procédé d'exploitation d'une éolienne comprenant un rotor (12), un générateur (14) entraîné par celui-ci et doté d'un convertisseur (15) et d'un dispositif de commande (7) qui présente une entrée pour un signal de commande pour la puissance réactive débitée et un régulateur (72) pour le convertisseur (15), comprenant le calcul local d'une valeur théorique de puissance réactive pour l'éolienne à partir du signal de commande pour la puissance réactive débitée,
la détection de la tension réelle effectivement débitée par l'éolienne, et la comparaison avec le signal de commande pour la puissance réactive débitée et la correction de la puissance réactive débitée par l'éolienne,
**caractérisé par**
la répartition, dans un module supplémentaire (8) prévu pour le régulateur (72) et relié côté sortie au régulateur (72), d'un signal pour la tension réelle au niveau de l'éolienne sur un trajet de signal faible séparé (81) passant par le module supplémentaire (8) et un trajet de signal fort séparé (82) passant par le module supplémentaire (8), le trajet de signal faible (81) présentant par rapport au trajet de signal fort (82) un élément de mémoire supplémentaire (83) qui mémorise des valeurs d'état historiques du trajet de signal faible (81),
l'action du module supplémentaire (8) sur une grandeur d'entrée du régulateur (72), et
la coopération du module supplémentaire (8) avec le régulateur (72) de telle sorte que le régulateur (72) utilise un signal de sortie du module supplémentaire (8) pour calculer la valeur théorique de puissance réactive pour l'éolienne.

19. Procédé selon la revendication 18, **caractérisé en ce que** l'éolienne est développée selon l'une quelconque des revendications 1 à 15.
